# EUROPÄISCHE PATENTANMELDUNG

(11) **EP 0 915 332 A2**
(43) Veröffentlichungstag der Anmeldung: **12.05.1999**
(21) Anmeldenummer: 98121021.4
(22) Anmeldetag: 05.11.1998
(51) Int. Cl.: G01N 25/48

(54) **Durchfluss-Sorptions-Messzelle**

(30) Priorität: 08.11.1997 DE 19749429
(71) Anmelder: Institut für Polymerforschung Dresden e.V., 01069 Dresden (DE)
(72) Erfinder: Schneider, Steffen, 09569 Oederan (DE); Schröder, Lutz, 01069 Dresden (DE); Arnold, Dietrich, 01445 Radebeul (DE)
(74) Vertreter: Rauschenbach, Marion, Dipl.-Ing.

(57) **Zusammenfassung**

Die Erfindung betrifft die Gebiete des Gerätebaus und der Chemie und betrifft eine Durchfluß-Sorptions-Meßzelle, wie sie z.B. für Untersuchungen thermischer Effekte bei chemischen Reaktionen zur Anwendung kommen kann.

Die Aufgabe der Erfindung besteht darin, die Nachteile der bekannten Meßzellen abzubauen und eine Optimierung der Versuchsparameter für einen breiteren Anwendungsbereich zu ermöglichen.

Die Aufgabe wird gelöst durch eine Durchfluß-Sorptions-Meßzelle, bestehend aus einem Meßzellenmantel, der von außen mit einer Auslaßkapillare spiralförmig umgeben ist, aus mindestens einer rohrförmigen Meßzellenkammer, aus mindestens zwei Führungsteilen, die die Meßzellenkammer in dem Meßzellenmantel positionieren, aus einem mit Öffnungen für den Durchfluß versehenen Verschlußteil, mit dem der Meßzellenmantel nach einer Seite hin verschlossen ist, aus einem Vorwärmer, der den Durchfluß durch die Meßzelle gewährleistet, wobei dieser Vorwärmer eine variable Vorwärmkapazität durch das Vorhandensein von mindestens zwei Vorwärmerwendeln und/oder -kapillaren besitzt, aus Dichtungen zwischen den einzelnen Bauteilen, aus Filtern oder Filterkombinationen oder Sieben.

## Beschreibung

Die Erfindung betrifft die Gebiete des Gerätebaus und der Chemie und betrifft eine Durchfluß-Sorptions-Meßzelle für ein Wärmeleitkalorimeter, wie es z.B. für Untersuchungen thermischer Effekte bei chemischen Reaktionen, insbesondere der Sorption von Flüssigkeiten oder Gasen durch Pulver oder Fasern zur Anwendung kommen kann.

Die Kalorimetrie, die Messung von Wärme, ist eine seit langem bekannte und fundamentale analytische Methode zur Untersuchung thermischer Effekte, die bei chemischen Reaktionen oder bei physikalischen oder biologischen Prozessen auftreten können. Mit Hilfe kalorimetrischer Messungen sind Aussagen zur Thermodynamik und auch zur Kinetik der in der Meßzelle ablaufenden Prozesse möglich (Hemminger, W. Höhne G.: Grundlagen der Kalorimetrie, Akademie-Verlag Berlin, 1980).

Neben der Unterscheidung hinsichtlich der Betriebsart, d.h. zwischen der Isothermen-, der Adiabatischen- und der Scanning-Kalorimetrie, wird zudem zwischen der statischen Kalorimetrie, der Titrations-Kalorimetrie und der Durchfluß-Kalorimetrie unterschieden (J. Coll. Int. Sci. 1990, 136, No. 2, S. 375ff.)

Die Erfindung bezieht sich auf das Gebiet der Durchfluß-Kalorimetrie.

Bei der Durchfluß-Kalorimetrie durchströmt mindestens ein Reaktant das Kalorimeter. Aus diesem Grund ist diese Meßanordnung vor allem für die Kolloid- und Grenzflächenchemie von Interesse, da auf diese Weise neben der Flüssig-Flüssig-, vor allem die Flüssig- und die Gas-Fest-Wechselwirkung, d.h. die Benetzung mit und die Konkurrenzsorption aus mehrkomponentigen Flüssigkeiten oder Gas- oder Dampfgemischen an Feststoffen untersucht werden kann (Thermochim. Acta, 1985, 96, No. 2, S. 377-390).

Die Vorteile der Durchfluß-Kalorimetrie sind folgende:
- Sorptionsprozesse an nicht suspendierbaren Feststoffen (sedimentierende Pulver, Fasern, Gewebe, Membranen usw.) mit geringer spezifischer Oberfläche sind untersuchbar,
- die Sorption durch Teile der Meßapparatur stört nicht,
- es treten keine thermischen Effekte durch Verdampfung, Destillation usw. auf,
- das Sorbens kann direkt in der Meßzelle konditioniert werden,
- die Gleichgewichtsbedingungen, wie z.B. die Konzentration, der pH-Wert oder die Ionenstärke, können exakt vorgegeben werden,
- es sind Bedingungen einstellbar, unter denen die gleichzeitig auftretenden Verdünnungs- und Mischungseffekte vernachlässigbar gering sind,
- es muß nicht wie bei vergleichbaren Messungen mittels Titrations-Kalorimetrie eine Zugabe von höherkonzentrierten Lösungen erfolgen, um die für die Einstellung des Sorptionsgleichgewichtes gewünschte Sorptivkonzentration einzustellen, so daß die hierbei zusätzlich auftretenden Effekte vernachlässigbar gering gehalten werden können,
- das Sorptivangebot und damit die Sorptionsgeschwindigkeit sind über die Flüssigkeitsströmung variierbar,
- der Versuchsaufbau ähnelt dem in der Flüssig-Fest-Chromatographie; damit ist die Durchfluß-Kalorimetrie für Sorptionsuntersuchungen mit der Frontalanalyse koppelbar und es kann an nur wenig Feststoff und simultan die Austauschenthalpie- und die Grenzflächenüberschuß-Isotherme ermittelt werden.

Diese Vorteile der Durchfluß-Kalorimetrie lassen erkennen, daß diese Methode eine einfache und vollständige thermodynamische Beschreibung von Sorptionsphänomenen ermöglicht.

Um die Durchfluß-Kalorimetrie in einem quasi-isothermen Kalorimeter zu betreiben und deren Vorteile bei der Untersuchung von Sorptionsprozessen in Flüssig-Fest-Systemen voll nutzen zu können, sind folgende Parameter zu optimieren.
- Der Volumenstrom der Medien, aus welchen die Sorption erfolgen soll (Gas- oder Flüssigkeitsgemisch oder Lösung).
- Die Kapazität des Vorwärmers, welcher die einströmenden Medien auf Meßtemperatur equilibriert.
- Das Totvolumen der Apparatur, welches nach unten durch die Kapazität des Vorwärmers begrenzt ist und möglichst gering sein sollte.
- Die Sorbensoberfläche, welche von der spezifischen Oberfläche des Sorbens und dessen Schüttdichte (Partikelgröße) abhängt und möglichst groß sein sollte, jedoch nach oben durch das Volumen der Meßkammer begrenzt ist.
- Das Volumen der Meßkammer, welches zur Vermeidung parasitärer Prozesse (Mischung, Verdünnung) immer voll mit dem Sorbens ausgefüllt sein sollte, so daß eine Verwendung kleinerer Meßkammern für die Messung an Sorbensien mit großer spezifischer Oberfläche nötig wird.

Eine bisher speziell für ein bekanntes Kalorimeter (TAM 2277, ThermoMetric AB Järfälla) erhältliche Durchfluß-Sorptions-Meßzelle ist ein Einbauteil für eine Perfusions-Titrations-Meßzelle (ThermoMetric). Die Durchfluß-Sorptions-Meßzelle besteht aus einem Zulaufrohr der Perfusions-Titrations-Meßzelle, aus einem Teflonverbinder der dieses Zulaufrohr mit dem eigentlichen Zulaufrohr der Durchfluß-Sorptions-Meßzelle verbindet und aus zwei Metallfiltern 0,2 µm Porenweite. Diese Metallfilter befinden sich zwischen Teflon-Ringen eingepreßt im unteren Teil eines das Sorbens aufnehmenden Innenzylinders, sowie in einem Meßzellendeckel. An letzteren wird das Teflon-Auslaufrohr angeschlossen, welches durch die Perfusions-Titrations-Meßzelle nach außen führt. Sowohl das Zulauf- als auch das Auslaufrohr sind nur aufgesteckt. Beide Rohre stellen eine gerade Verbindung mit dem Kalorimeteräußeren dar (Langmuir, 1987, 3, 1051-1056).

Diese bekannte Meßzelle der Durchfluß-Kalorimetrie weist jedoch folgende Mängel auf.
- Die Vorwärmkapazität ist begrenzt.
- Der maximale Volumenstrom durch die Meßzelle ist gering.
- Das Volumen der Meßkammer ist gering.
- Die Meßzelle ist nur begrenzt druckbelastbar.
- Die Meßzelle weist nur eine geringe Flexibilität bezüglich der Verwendung anderer Filter oder etwa Filterkombinationen zur Fixierung des Sorbens in der Meßzelle auf.

Die Aufgabe der Erfindung besteht darin, die o.g. Nachteile der bekannten Meßzelle abzubauen und eine Optimierung der Versuchsparameter für einen breiteren Anwendungsbereich zu ermöglichen.

Die Aufgabe wird von der in den Ansprüchen angegebenen Erfindung gelöst. Weiterbildungen sind Gegenstand der Unteransprüche.

Die Funktionsweise der erfindungsgemäßen Durchfluß-Sorptions-Meßzelle ist folgendermaßen.
Ein Sorbens, bei dem es sich um Fasern oder um ein kugel-, schuppen- oder blättchenförmiges Pulver von 5 - 500 µm mittlerer Korngröße oder um Kapillaren oder um Folien handeln kann, alle mit einer spezifischen Oberfläche von mindestens 0,1 m²/g, wird entweder trocken oder feucht in die Meßzellenkammer eingebracht. Dies kann beispielsweise durch Einsaugen, Einrütteln, Einstopfen, Einfüllen oder Einschichten erfolgen. Die Meßzellenkammer wird nun mit zwei Führungsteilen oben und unten verschlossen. Sofern dies erforderlich ist, wird zwischen die Meßzellenkammer und eines oder beide Führungsteile ein Filter oder eine Filterkombination oder ein Sieb eingelegt. Nach dem Schließen der Meßzellenkammer wird diese in den Meßzellenmantel eingebracht und durch die beiden Führungsteile darin positioniert. Die so zusammengefügte Meßzelle wird durch ein Verschlußteil mit Gewinde verschlossen und mit einem Verbindungsteil an den Vorwärmer angeschlossen. Der Vorwärmer kann dabei mehrere mit unterschiedlicher Vorwärmkapazität ausgestattete Vorwärmerkapillaren enthalten. Die unterschiedliche Vorwärmkapazitat wird durch die unterschiedliche Länge bzw. den unterschiedlichen Innendurchmesser der Vorwärmerkapillaren realisiert.
Nach dem Zusammenbau wird die Durchfluß-Sorptions-Meßzelle innerhalb des Wärmeleitkalorimeters mit dem Trägergas oder der Trägerflüssigkeit equilibriert, d.h. das Gas oder die Flüssigkeit oder das Gas- oder Flüssigkeitsgemisch werden durch die Durchfluß-Sorptions-Meßzelle gefördert. Danach wird der Vorwärmer auf den für den konkreten Anwendungsfall notwendige und optimale Vorwärmerkapazität eingestellt und optimiert. Welche der in dem Vorwärmer befindlichen Vorwärmerkapillare für diesen konkreten Anwendungsfall dann benötigt wird, ist in Vorversuchen aus zu testen. Dies ist wichtig, da die Temperatur der strömenden Medien in der Meßzelle exakt die Meßtemperatur haben muß, ein zu großer Vorwärmer aber das Totvolumen der Meßzelle unnötig erhöhen würde. Ebenfalls in Vorversuchen ist der günstigste Volumenstrom zu ermitteln.

Auf Grund des Meßaufbaus in der Durchfluß-Sorptions-Kalorimetrie besteht die Möglichkeit, neben der kalorimetrisch erfaßbaren Wechselwirkungsenthalpie auch die Stoffmenge an wechselwirkender Substanzen zu ermitteln. Dies kann auf chromatographischem Wege erfolgen. Zu beachten ist dabei, daß die Genauigkeit der Auswertung kalorimetrischer Signale mit dem Volumenstrom zunimmt, jedoch die Genauigkeit der Auswertung chromatographischer Signale abnimmt.

Bevor die Messungen erfolgen können, muß der Feststoff mit dem Trägermedium im chemischen Gleichgewicht und die Durchfluß-Sorptions-Meßzelle im thermischen Gleichgewicht mit dem Wärmeleitkalorimeter sein.
Danach wird dem Trägermedium eine zu sorbierende Substanz oder ein Substanzgemisch beigegeben oder der Träger wird gegen eine entsprechende Lösung der zu sorbierenden Substanz im Trägermedium ersetzt. Dieser Wechsel entspricht einem Einzelschritt bei der Aufnahme der Sorptions-Isothermen. Die gesamte Isotherme ergibt sich aus einer Reihe derartiger Einzelschritte, wobei in jedem darauf folgenden Schritt eine andere Konzentration an zu sorbierender Substanz im Trägermedium eingestellt wird. Wichtig ist, daß sich der Volumenstrom der durch die Meßzelle strömenden Medien während des Wechsels der Lösungen nicht oder nur unwesentlich ändert. Bei sehr dicht gepackten Feststoffen in der Meßzelle darf sich auch die Viskosität des Feststoffes nicht oder nur in sehr geringem Maße ändern, was durch eine entsprechend geringe Konzentrationsänderung gegeben ist.
Gelangt die zu sorbierende Substanz über das Trägermedium in Kontakt zum Feststoff, so stellt sich entsprechend der Konzentrationsänderung gegenüber dem vorherigen Schritt ein Verteilungsgleichgewicht zwischen Sorbens und Lösung ein. Ist die Konzentrationsänderung positiv (cₙ < cₙ₊₁) und kann das Sorbens noch Sorptiv aufnehmen, so erfolgt eine Sorption d.h. ein Teil der zu sorbierenden Substanz aus dem Trägermedium wird an den Feststoff, welcher Sorbens genannt wird abgegeben, es bildet sich ein Sorbat (Sorbens-Sorptiv-Komplex). Ist die Sorption reversibel und ist die Konzentrationsänderung negativ (cₙ > cₙ₊₁) so erfolgt eine Desorption. Je nach Reversibilität und Betrag der negativen Konzentrationsänderung gibt das Sorbat alle oder nur einige der Sorptivmoleküle wieder an das Trägermedium ab.
Wenn sich bei der Sorption bzw. Desorption die Enthalpie in der Durchfluß-Sorptions-Meßzelle ändert, so wird die Enthalpiedifferenz vom Kalorimeter detektiert. Wieviele Moleküle des Sorptivs zwischen dem Träger und dem Sorbens ausgetauscht werden, kann durch einen Detektor am Ausgang der Meßzelle ermittelt werden. Diese Ermittlung wird auf chromatographischem Wege durchgeführt und als Frontalanalyse bezeichnet.

Durch die erfindungsgemäße Meßzelle werden die Nachteile der bekannten Meßzelle behoben, d.h., daß
- die Vorwärmkapazität rund um den Faktor 10 erhöht wird, so daß nun prinzipiell ein maximaler Volumenstrom durch die Meßzelle von ca. 30 ml/h möglich ist,
- das Volumen der Meßkammer von ca. 0,5 auf maximal 2,2 ml erhöht wird und daß durch den einfachen Austausch der Meßkammern eine weitgehende Flexibilität zwischen praktisch 0,1 und 2,2 ml erreicht wird,
- die neue Meßzelle durch die Verwendung spezieller, extrem druckdichter Verbinder eine 10 bis 15 fach höhere Druckbelastbarkeit aufweist,
- bei einem problemlosen Austausch der Filter praktisch solche mit beliebiger Porosität oder etwa auch Filterkombinationen aus verschiedensten Materialien verwendet werden können.

Insgesamt ist der Durchfluß-Sorptions-Kalorimetrie mit dem bekannten Kalorimeter (TAM 2277) mit der erfindungsgemäßen Meßzelle eine sehr viel weiter gehende Anwendbarkeit zur Untersuchung von Sorptionsphänomenen eröffnet worden. Durch die Möglichkeit mit deutlich höheren Volumenströmen zu arbeiten, sind die Meßzeiten spürbar minimiert und Fehler bei der Wärmemengenbestimmung verringert worden.

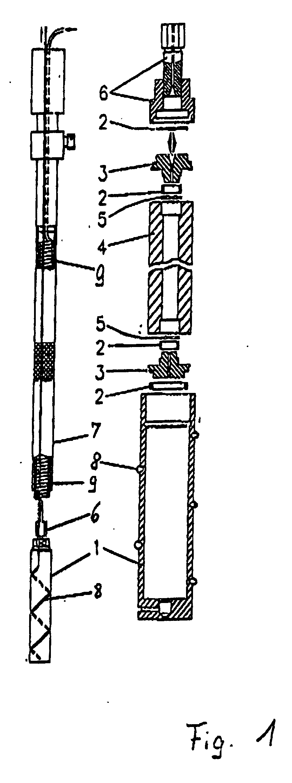

Im weiteren wird die Erfindung an einem Ausführungsbeispiel näher erläutert. Dabei ist in Fig. 1 die erfindungsgemäße Meßzelle dargestellt.

Von der Oberfläche eines mit MSA gepfropftem Polyethylenpulver soll der LEWIS'sche Säurecharakter bestimmt werden. Das Polyethylenpulver hat eine mittlere Korngröße von 25 µm und ist bei Raumtemperatur unter einem Druck von 10⁻⁵ mbar 24 h getrocknet worden. Danach ist es mit Reinststickstoff begast und in einer Glove-Box unter Reinststickstoff in die Meßzellenkammer 4 eingesaugt worden. Um eine möglichst homogene Füllung der Meßzellenkammer 4 zu erreichen, ist die Meßzellenkammer 4 einer leichten Vibration ausgesetzt worden und wurde nur in kleinen Portionen gefüllt. Die Meßzellenkammer 4 hat ein Fassungsvermögen von 0,5 ml und nimmt ca. 0,35 g des Polyethylenpulvers auf. Dadurch ist sie vollständig gefüllt. Auf beiden Seiten der Meßzellenkammer 4 wird eine Filterkombination 5 aus jeweils zwei Metallfiltern 5 mit 3 µm Porenweite und einem dazwischen gelegten Filterpapier angeordnet. Die Meßzellenkammer 4 wird dann mit den Führungsteilen 3 auf beiden Seiten verschlossen und in den Meßzellenmantel 4 eingebracht, wobei die Führungsteile 3 eine Positionierung und Abdichtung der Meßzellenkammer 4 zum Meßzellenmantel 1 erreichen. Danach wird auf der einen Seite des Meßzellenmantels 1 der Vorwärmer 7 angeschlossen, welcher vier Vorwärmerwendeln 9 enthält. Weiterhin wird die Auslaßkapillare 8 des Meßzellenmantels 1 angeschlossen und die erfindungsgemäße Durchfluß-Sorptions-Meßzelle in das Kalorimeter eingeführt. Mit einem Rückdruckregler, der auf 20 bar eingestellt ist, werden bei kleinen Volumenströmen zunächst die Gasblasen aus der Meßzelle entfernt.
Anschließend werden Vorversuche durchgeführt, um die Meßbedingungen hinsichtlich des Volumenstromes und der Vorwärmerkapazität konkret zu ermitteln. Die gefüllte Meßzelle wurde dazu mit 0, 1, 3, 6, 9, 12, 15, 20, 25, 30, 35 und 40 ml/h Zyklohexan (Trägermedium) durchströmt und der sich ergebende Versatz der Basislinie des Kalorimeters ermittelt. Sobald der Versatz linear vom Volumenstrom abhing, arbeitete der Vorwärmer 7 effektiv und optimal.

Neben der mit dem Kalorimeter bestimmbaren Sorptionsenthalpie des als Sondenbase ausgewählten Triethylamins (Austauschenthalpie des Zyklohexan gegen Triethylamin) sollte auch die vom Polyethylen sorbierte Stoffmenge an Triethylamin (volumenreduzierter Grenzflächenüberschuß) auf chromatographischem Wege mittels Frontalanalyse ermittelt werden. Aus diesem Grunde sind auch die chromatographischen Eigenschaften der polyethylengefüllten erfindungsgemäßen Durchfluß-Sorptions-Meßzelle in Vorversuchen festgestellt worden. Dazu wurden während der o.g. Volumenströme jeweils 40 µl einer 3%-igen Lösung von deuteriertem Zyklohexan injiziert. Die mit einem HPLC-Brechungsindexdetektor am Ausgang der Meßzelle erhaltenen symmetrischen Konzentrations-Zeit-Signale wurden anschließend nach einer chromatographischen Standardmethode (J. R. Conder, C. L. Young, 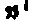 Physical Measurement by Gas Chromatography", John Wiley & Sons, Chichester/New York/Brisbane/Toronto, 1979) ausgewertet und ergaben eine noch als akzeptabel geltende Trennstufenzahl von 50 bei einem Volumenstrom von rund 3 ml/h. Entsprechend diesem Volumenstrom wird dann der Vorwärmer 7 ausgewählt, der bei einem Minimum an Totvolumen noch optimal arbeitet. In diesem Fall ist eine 2 m lange und einen Innendurchmesser von 0,5mm besitzende Vorwärmerkapillare 9 gewählt worden. Die gesamte Meßanordnung hat nach der Optimierung letztlich ein Totvolumen von ca. 1 ml.

Um die Konzentration an Triethylamin am Ausgang der Meßzelle zeitaufgelöst zu messen, ist ein HPLC-UV-Detektor eingesetzt worden, der die Absorbanz der die Meßzelle vorlassenden Flüssigkeit bei 252 nm erfaßt.

Nachdem sich zunächst das chemische Gleichgewicht zwischen dem Polyethylenpulver und dem Trägermedium Zyklohexan eingestellt hat, ist eine 2 millimolare Lösung von Triethylamin in Zyklohexan in die Meßzelle gepumpt worden. Zur Förderung des Zyklohexans und der Triethylaminlösung werden zwei gleich schnell fördernde HPLC-Pumpen eingesetzt, die über ein Wechselventil wahlweise in die Meßzelle oder in den Abfall pumpen. Dadurch ist es möglich nach der Einzelschritt-Sorptions-Desorptions-Methode und auch im kumulativen Modus zu arbeiten.
Für die Einzelschritt-Sorptions-Desorptions-Methode wird gewechselt von Zyklohexan auf Triethylaminlösung (Sorption), dann zurück auf Zyklohexan (Desorption), dann auf eine Triethylaminlösung mit höherer Konzentration an Triethylamin (Sorption), dann wieder auf Zyklohexan (Desorption), usw. Für den kumulativen Modus wird gewechselt von Zyklohexan auf Triethylaminlösung (Sorption), dann auf eine Triethylaminlösung mit höherer Konzentration an Triethylamin (Sorption), dann auf eine Triethylaminlösung mit wiederum höherer Konzentration an Triethylamin (Sorption), usw.
Genauere und aussagekräftigere Resultate werden jedoch in diesem Fall mit der Einzelschritt-Sorptions-Desorptions-Methode erhalten.
Während die Sorption von Triethylamin am unberührten MSA-gepfropften Polyethylenpulver exotherm verläuft, ist die Desorption endothermer Natur. Im ersten Desorptionsschritt ist die Wechselwirkung zwischen Triethylamin und dem Polyethylenpulver nur zu 20 % reversibel. Zur Aufnahme der Austauschenthalpie- und der Grenzflächenüberschußisotherme ist die Konzentration an Triethylamin von 5 bis 100 mmol/l in Abständen von je 5 mmol/l variiert worden. Nach jedem der Sorptionsschritte folgt ein Desorptionsschritt mit Zyklohexan. Bei einer Triethylaminkonzentration von ca. 40 mmol/l gehen beide Isothermen in ein Plateau über. Im Bereich des Plateaus ist die Wechselwirkung zu 95 % reversibel und die molare Sorptionsenthalpie beträgt ca. 70 kJ/mol. Da die Meßzelle auch bei höheren Volumenströmen und damit auch bei höheren Vordrücken dicht hält, sind die Einzelschritt-Sorptions-Desorptions-Messungen bei einem Volumenstrom von 18 ml/h wiederholt worden. Aufgrund der schnelleren Einstellung des Sorptions-Gleichgewichtes ist bei diesem Volumenstrom nur 1/6 der Meßzeit benötigt worden.

Es werden auch schärfere kalorimetrische Signale erhalten, so daß der Fehler bei der Bestimmung der Sorptionsenthalpie von ca. 5 % auf 2 % gesenkt werden konnte. Eine gleichzeitige Aufnahme der Grenzflächenüberschußisotherme ist in diesem Fall nur mit einer nachgeschalteten HPLC-Säule möglich, die ebenfalls das MSA-modifizierte Polyethylenpulver enthält.

### Bezugszeichenliste

- 1: Meßzellenmantel
- 2: Dichtung
- 3: Führungsteil
- 4: Meßzellenkammer
- 5: Filter/Siebe
- 6: Verschlußteil
- 7: Vorwärmer
- 8: Auslaßkapillare
- 9: Vorwärmerwendel/-kapillare

## Patentansprüche

1. Durchfluß-Sorptions-Meßzelle, bestehend aus einem Meßzellenmantel (1), der von außen mit einer Auslaßkapillare (8) spiralförmig umgeben ist, aus mindestens einer rohrförmigen Meßzellenkammer (4), die sich innerhalb des Meßzellenmantels (1) befindet, wobei diese Meßzellenkammer (4) austauschbar angeordnet ist, aus mindestens zwei Führungsteilen (3), die die Meßzellenkammer (4) in dem Meßzellenmantel (1) positionieren, die mit Öffnungen für den Durchfluß versehen sind, und die die Meßzellenkammer (4) und Meßzellenmantel (1) gegeneinander abdichten, aus einem mit Öffnungen für den Durchfluß versehenen Verschlußteil (6), mit dem der Meßzellenmantel (1) nach einer Seite hin verschlossen ist, aus einem Vorwärmer (7), der an die vom Verschlußteil (6) gegenüberliegenden Seite des Meßzellenmantels (1) angeschlossen ist und den Durchfluß durch die Meßzelle gewährleistet, wobei dieser Vorwärmer (7) eine variable Vorwärmkapazität durch das Vorhandensein von mindestens zwei in Bezug auf ihre Vorwärmkapazität unterschiedlichen Vorwärmerwendeln und/oder -kapillaren (9) besitzt, aus Dichtungen (2) zwischen den einzelnen Bauteilen, aus Filtern oder Filterkombinationen oder Sieben (5), die am Eingang und/oder am Ausgang der Meßzellenkammer (4) angeordnet sind, wobei diese Filter oder Filterkombinationen oder Siebe (5) austauschbar angeordnet sind.

2. Durchfluß-Sorptions-Meßzelle nach Anspruch 1, bei der der Vorwärmer (7) ein zweistufiger Vorwärmer (7) mit mindestens zwei fest eingebauten Vorwärmerwendeln (9) und einem gerade eingebauten Rohr für die Aufnahme mindestens einer Vorwärmerkapillare (9) ist.

3. Durchfluß-Sorptions-Meßzelle nach Anspruch 1, bei der die Filter oder Filterkombinationen oder Siebe (5) aus Metall, Keramik, Zellstoff, Glasfasern, Kunststoffasern, Papier bestehen.
